(19) Europäisches Patentamt
European Patent Office
Office européen des brevets

(11) EP 2 426 095 A1

(12) **EUROPÄISCHE PATENTANMELDUNG**

(43) Veröffentlichungstag:
**07.03.2012 Patentblatt 2012/10**

(51) Int Cl.:
***C04B 24/00** (2006.01)* ***C04B 24/26** (2006.01)*
***C04B 28/14** (2006.01)*

(21) Anmeldenummer: **10175221.0**

(22) Anmeldetag: **03.09.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **Sika Technology AG**
**6340 Baar (CH)**

(72) Erfinder:
- **Hampel, Christina**
  **8102, Oberengstringen (CH)**
- **Zimmermann, Jörg**
  **8046, Zürich (CH)**
- **Al Shemari, Jabbar**
  **8052, Zürich (CH)**
- **Müller, Markus**
  **8965, Berikon (CH)**

(74) Vertreter: **Sika Patent Attorneys**
**c/o Sika Technologies AG**
**Tüffenwies 16-22**
**8048 Zürich (CH)**

(54) **Dispergiermittel für Gipszusammensetzungen**

(57) Die vorliegende Erfindung betrifft die Verwendung einer Polymermischung umfassend mindestens ein Polymer **Pa** und mindestens ein Polymer **Pb** als Dispergiermittel, insbesondere als Verflüssiger, für Gipszusammensetzungen, insbesondere für Gipsplatten, wobei der Säuregehalt des Polymers **Pa** 1.5 bis 4, der Säuregehalt des Polymers **Pb** 0.5 bis 1.4 Säuregruppen pro 1 g Polymer beträgt.

EP 2 426 095 A1

## Beschreibung

### Technisches Gebiet

Die vorliegende Erfindung betrifft das Gebiet der Gipszusammensetzungen, insbesondere der Dispergiermittel für Gipszusammensetzungen.

### Stand der Technik

Polymere aus α- β-ungesättigten Carbonsäuren mit Polyalkylenglykol-Seitenketten werden bereits seit längerem in der Betontechnologie als Dispergiermittel, insbesondere als Verflüssiger, wegen ihrer starken Wasserreduktion eingesetzt. Diese Polymere haben eine Kammpolymerstruktur. Es gibt eine Reihe von solchen Kammpolymeren, welche neben Ester- und Carbonsäure-Gruppen auch Amidgruppen aufweisen.

Es hat sich nun gezeigt, dass die bekannten Betondispergiermittel nur bedingt für Gipszusammensetzungen eingesetzt werden können. Die bekannten Betondispergiermittel verzögern im Gips so stark, dass die Gipszusammensetzung schlecht abbindet und/oder erreichen nicht die gewünschte Verflüssigungsleistung.

Insbesondere Dispergiermittel in Gipszusammensetzungen zur Herstellung von Gipsplatten sowie zur Verwendung bei Estrichen erfordern bestimmte Eigenschaften, welche mit den herkömmlichen Gipsdispergiermitteln nicht erreicht werden.

### Darstellung der Erfindung

Aufgabe der vorliegenden Erfindung ist es daher, Dispergiermittel zur Verfügung zu stellen, bei denen die Nachteile des Standes der Technik überwunden werden, und welche geeignet sind, eine ausreichende Verflüssigungswirkung von Gipszusammensetzungen, insbesondere für die Herstellung von Gipsplatten oder Estrichen, zu erzielen ohne zu stark zu verzögern.

Überraschenderweise wurde gefunden, dass dies durch die Verwendung einer Polymermischung umfassend mindestens ein Polymer Pa und mindestens ein Polymer **Pb** als Dispergiermittel für Gipszusammensetzungen gemäss Anspruch 1 erreicht werden kann.

Es konnte nun überraschend festgestellt werden, dass mit einer Polymermischung umfassend mindestens ein Polymer **Pa,** respektive mindestens ein Polymer **Pb,** welche einen Säuregehalt von 1.5 bis 4, respektive 0.5 bis 1.4 mmol Säuregruppen pro 1 g Polymer aufweisen, eine gute Verflüssigungswirkung sowie kurze Abbindzeiten in Gipszusammensetzungen erreicht werden können.

Die Erfindung umfasst zudem die Verwendung einer Polymermischung umfassend mindestens ein Polymer **Pa** und mindestens ein Polymer **Pb** zur Herstellung von Gipsplatten.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft die Verwendung einer Polymermischung umfassend mindestens ein Polymer **Pa** und mindestens ein Polymer **Pb** als Dispergiermittel für Gipszusammensetzungen, insbesondere für die Herstellung von Gipsplatten.

Das Dispergiermittel kann insbesondere verwendet werden als Verflüssiger, als Wasserreduzierer oder zur Verbesserung der Verarbeitbarkeit und der Fliessfähigkeit der damit hergestellten Gipszusammensetzungen. Solche Gipszusammensetzungen sind besonders geeignet für die Herstellung von Gipsplatten. Unter Gipsplatten werden beispielsweise Gipskartonplatten, bei denen ein Gipskern zwischen zwei Kartonplatten eingeschlossen ist, Gipsfaserplatten, welche zusätzlich Fasern enthalten, sowie Gipswandplatten, welche üblicherweise in eine Form gegossen werden, verstanden. Besonders geeignet sind die erfindungsgemässen Gipszusammensetzungen für Gipskartonplatten, bei denen ein Gipskern umfassend oder bestehend aus Calciumsulfat-β-Halbhydrat und einer Polymermischung umfassend mindestens ein Polymer **Pa** und mindestens ein Polymer **Pb** zwischen Kartonplatten eingeschlossen ist.

In einer besonders bevorzugten Verwendung wird eine Polymermischung umfassend mindestens ein Polymer **Pa** und mindestens ein Polymer **Pb** als Verflüssiger für solche Gipszusammensetzungen verwendet.

Unter "Gipszusammensetzung" wird eine Zusammensetzung aus mineralischen Bindemitteln verstanden, welche mindestens 30 Gew.-%, bevorzugt mindestens 50 Gew.-%, noch mehr bevorzugt mindestens 70 Gew.-%, oder 100 Gew.-% Gips enthält, bezogen auf das Gesamtgewicht des mineralischen Bindemittels. Bei einer bevorzugten Anwendung ist die Gipszusammensetzung zementfrei. Als Gipszusammensetzungen werden insbesondere Zusammensetzungen verstanden, welche überwiegend sulfatische Bindemittel enthalten.

Zum Term "Gips" wird jede bekannte Form von Gips gezählt, insbesondere Calciumsulfat-Dihydrat, Calciumsulfat-α-Halbhydrat, Calciumsulfat-β-Halbhydrat oder Calciumsulfat-Anhydrit oder Mischungen davon.

In einer bevorzugten Ausführungsform ist Gips Calciumsulfat-β-Halbhydrat und die Gipszusammensetzungen auf Basis von Calciumsulfat-β-Halbhydrat werden zur Herstellung von Gipsplatten verwendet. Vorzugsweise umfasst die Gipszusammensetzung mindestens 70 Gew.-% Calciumsulfat-β-Halbhydrat, noch mehr bevorzugt mindestens 90 Gew.-% Calciumsulfat-β-Halbhydrat, bezogen auf das Gesamtgewicht des mineralischen Bindemittels.

Unter den Begriff "mineralische Bindemittel" fallen neben Gips weitere mineralische Bindemittel, beispielsweise hydraulisch abbindende Substanzen, w i e beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Bei dem mindestens einen Polymers **Pa** und bei dem mindestens einen Polymer **Pb** handelt es sich um ein Polymer **P**, wobei das Polymer **P** umfasst

a) eine Hauptkette enthaltend Kohlenwasserstoffgruppen,

b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und

c) mindestens eine Seitenkette umfassend mindestens eine Polyoxyalkylengruppe, wobei die Polyoxyalkylengruppe über ein Verbindungsstück, welches mindestens eine Ester-, Amid- oder Imidgruppe, vorzugsweise mindestens eine Ester- oder Amidgruppe, umfasst, an die Hauptkette gebunden ist.

Der Säuregehalt des Polymers **Pa** beträgt 1.5 bis 4, bevorzugt 1.7 bis 3.5 mmol Säuregruppen pro 1 g Polymer.

Der Säuregehalt des Polymers **Pb** beträgt 0.5 bis 1.4, bevorzugt 0.9 bis 1.2 mmol Säuregruppen pro 1 g Polymer.

Das Gewichtsverhältnis von Polymer **Pa :** Polymer **Pb** beträgt 50-95 : 5-50, vorzugsweise 60-90 : 10-40, insbesondere bevorzugt 70-90 : 10-30.

Unter 'Molekulargewicht' oder 'Molgewicht' versteht man im Sinne der Erfindung das Molekulargewichtsmittel $M_w$.

Unter "(Meth)acrylsäure" wird im gesamten vorliegenden Dokument sowohl Acrylsäure als auch Methacrylsäure oder Mischungen davon verstanden.

Unter dem Begriff "Hauptkette enthaltend Kohlenwasserstoffgruppen" wird eine Verbindung verstanden, welche Kohlenstoffatome und Wasserstoffatome enthält. Die Kohlenwasserstoffgruppen können gesättigt oder ungesättigt sein, aliphatische, aromatische, Arylaklyl-, Alkylaryl-, lineare oder verzweigte Gruppen enthalten oder daraus bestehen. Diese Hauptkette enthaltend Kohlenwasserstoffgruppen kann beispielsweise durch radikalische Polymerisation hergestellt werden und daher je nach verwendetem Initiatorsystem und gegebenenfalls Molekulargewichtsregler an den Enden oder in der Kette eines oder mehrere Heteroatome wie beispielsweise S, O, N, P enthalten. Die Hauptkette kann aufgebaut sein aus gleichen oder unterschiedlichen Kohlenwasserstoffgruppen oder -einheiten, die abwechselnd, blockartig oder zufällig gereiht sein können. Beispiele für eine Hauptkette enthaltend Kohlenwasserstoffgruppen sind Kohlenwasserstoffketten, wie sie beispielsweise durch Polymerisation von (Meth)acrylsäure oder deren Derivaten oder durch Copolymerisation von Acrylsäure mit Methacrylsäure oder deren Derivaten oder durch Copolymerisation von Maleinsäure bzw. deren Derivaten mit Vinyl- oder Allylverbindungen entstehen, wenn man die Seitenketten, die keine reinen Kohlenwasserstoffgruppen sind, beispielsweise Säure-, Ester-, Ether- oder Amidgruppen, von der Kette entfernt. Am meisten bevorzugt ist eine Kohlenwasserstoffkette, wie sie durch Polymerisation von Acrylsäure entstanden ist.

Unter dem Begriff "Seitenkette umfassend mindestens eine Säuregruppe oder ein Salz davon" wird eine Verbindung verstanden, welche mindestens eine Carbonsäuregruppe, Sulfonsäuregruppe, Phosphonsäuregruppe, Phosphorsäuregruppe oder ein Salz davon enthält. Die Säuregruppe kann gar nicht, teilweise oder vollständig neutralisiert sein und als Salz oder Anhydrid vorliegen. Vorzugsweise ist die Säuregruppe eine Carbonsäuregruppe.

Die Seitenkette umfasst mindestens eine Polyoxyalkylengruppe. Die Polyoxyalkylengruppe ist vorzugsweise über ein Verbindungsstück, welches mindestens eine Ester-, Amid- oder Imidgruppe umfasst, an die Hauptkette gebunden.

Das Verbindungsstück umfasst mindestens eine Ester-, Amid- oder Imidgruppe, vorzugsweise eine Ester- oder Amidgruppe, vorzugsweise ausgewählt aus der Gruppe bestehend aus -COO-, -CO-NH-, -R'-COO-, und - R-CO-NH-, wobei R' unabhängig voneinander für einen $C_1$ - $C_6$ Alkylenrest steht. Das Polymer **P** kann verschiedene Seitenketten umfassen welche mindestens eine Polyoxyalkylengruppe umfassen, und welche über verschiedene Verbindungsstücke an die Hauptkette gebunden sind. Beispielsweise kann das Polymer **P** Seitenketten umfassen, welche über eine Ester-, Amid- oder Imidgruppe oder Mischungen davon an die Hauptkette gebunden sind. In einem Polymer **P** können also Ester-, Amid- oder Imid-Verbindungsstücke gemischt vorkommen. Beispielsweise kann bei einem Polymer **P** ein Teil der Seitenketten umfassend mindestens eine Polyoxyalkylengruppe über eine Estergruppe und ein anderer Teil der Seitenketten umfassend mindestens eine Polyoxyalkylengruppe über eine Amidgruppe an die Hauptkette gebunden sein.

Die Polyoxyalkylengruppe enthält oder besteht vorzugsweise aus Polyoxyethylengruppen, Polyoxypropylengruppen oder Mischungen von Oxyethylen- und Oxypropylengruppen. Insbesondere bevorzugt sind Polyoxyethylengruppen.

Um die erfindungsgemässe Wirkung zu erzielen, muss der Säuregehalts des Polymers **Pa** von 1.5 bis 4, bevorzugt 1.7 bis 3.5 mmol Säuregruppen pro 1 g Polymer, respektive der Säuregehalts des Polymers **Pb** von 0.5 bis 1.4, bevorzugt 0.9 bis 1.2 mmol Säuregruppen pro 1 g Polymer, betragen.

Der Säuregehalt (**SG**) des Polymers **Pa,** respektive **Pb** wird durch die Summe der freien Säuregruppen und deren Salze in mmol, welche in 1 g Polymer **Pa,** respektive **Pb,** enthalten ist, angegeben. Als Säuregruppen werden alle Gruppen verstanden, welche eine Säure oder deren Salz enthält. Die Säuregruppe kann also auch teilweise oder vollständig neutralisiert sein. Der Säuregehalt **SG** in mmol/g Polymer berechnet sich nach der Formel

$$\left(\frac{z*m}{(M_{WA}*m+M_{WB}*n+M_{WC}*o)}\right)*1000$$

, wobei z der Zahl der Protonen entspricht, welche die Säureeinheit **A** der Formel (I) abzugeben vermag. So ist beispielsweise im Falle einer Monocarbonsäure z = 1 und z = 2, falls es sich bei der Säureeinheit **A** der Formel (I) um eine Dicarbonsäure handelt. $M_w$ ist das Molekulargewicht der Säure- oder Struktureinheit(en), z.B. $M_{WA}$= 72 g/mol, falls es sich bei der Säureeinheit **A** der Formel (I) um eine Acrylsäure handelt. Bei den Indizes m, n und o handelt es sich um Angaben in Mol%, so beschreibt m den Anteil der Säureeinheit **A** der Formel (I) in Mol% am Polymer **Pa**, respektive **Pb,** n den Anteil der Struktureinheit **B** der Formel (II) in Mol% am Polymer **Pa,** respektive **Pb** und o den Anteil der gegebenenfalls umfassten Struktureinheit **C** in Mol% am Polymer **Pa,** respektive **Pb.**

Das Polymer **P** umfasst vorzugsweise

a') mindestens eine Säureeinheit **A** der Formel (I);

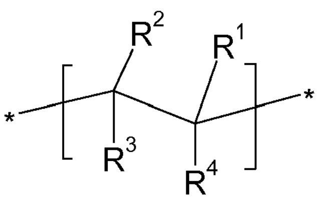

(I)

b') mindestens eine Struktureinheit **B** der Formel (II);

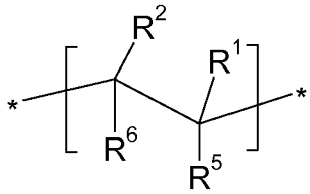

(II)

und gegebenenfalls
c') mindestens eine weitere Struktureinheit **C.**

Dabei stehen unabhängig voneinander $R^1$ und $R^2$ für H, COOM, $CH_2COOM$ oder eine Alkylgruppe mit 1 bis 5 Kohlenstoffatomen, insbesondere für H; $R^3$ steht unabhängig voneinander für H, $CH_3$, COOM oder $CH_2COOM$, insbesondere für H; und $R^4$ steht unabhängig voneinander für einen Rest der Carbonsäure, Sulfonsäure, Methylsulfonsäure, Arylsulfonsäure, Carbonylamidomethylpropansulfonsäure, Phosphorsäure oder Phosphonsäure oder deren Salze. $R^4$ steht insbesondere für COOM; oder $R^3$ kann mit $R^4$ einen Ring bilden zu -CO-O-CO-.

M bedeutet H, Alkalimetall, Erdalkalimetall oder andere zwei- oder dreiwertige Metallatome, Ammonium, Alkyl-Ammonium, oder eine Mischung davon. M kann insbesondere H, Na, Ca/2, Mg/2, $NH_4$ oder ein organisches Ammonium darstellen. Es ist dem Fachmann klar, dass bei den mehrwertigen Ionen ein weiteres Gegenion vorhanden sein muss, das unter anderem auch ein Carboxylat desselben oder eines anderen Moleküls des Polymers **P** sein kann. Die Ammoniumverbindungen sind insbesondere Tetraalkylammonium oder aber $HR_3N$, wobei R eine Alkylgruppe insbesondere eine $C_1$- bis $C_6$-Alkylgruppe, bevorzugt Ethyl oder Butyl, darstellt. Ammoniumionen werden insbesondere durch die

Neutralisation der Carboxylgruppe mit handelsüblichen tertiären Aminen erhalten.

Beispiele für geeignete Säureeinheiten **A** sind Einheiten, die durch Polymerisation entstehen von Acrylsäure, Methacrylsäure, Mesaconsäure, Citraconsäure, Glutactonsäure, Fumarsäure, Maleinsäure, Maleaminsäure, Itaconsäure, Vinylbenzoesäure, Crotonsäure, Vinylsulfonsäure, Allylsulfonsäure, Methallylsulfonsäure, 2-Acrylamido-2-methylpropan-sulfonsäure oder Vinylphosphonsäure, oder Derivate oder Analoga davon, wie beispielsweise das Maleinsäurehalbamid aus Maleinsäure und Sulfanilsäure, insbesondere das N-(4-Sulfophenyl)maleinsäureamid. Bevorzugt sind Monocarbonsäuren. Insbesondere geeignet als Säureeinheit **A** ist eine Einheit, entstanden durch Polymerisation einer Acrylsäureeinheit oder ein Salz davon.

Vorzugsweise ist die mindestens eine Säureeinheit **A** der Formel (I) teilweise oder vollständig neutralisiert. Die Säureeinheit kann als freie Säure oder auch als Salz oder Teilsalz vorliegen, wobei der Term "Salz" hier und im Folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst.

Besonders bevorzugt ist ein Polymer **P,** bei dem $R^1$, $R^2$ und $R^3$ für H, $R^4$ für COOM und M für H oder ein Alkali- oder Erdalkalimetall stehen. Die Säureeinheit **A** der Formel (I) stellt somit vorzugsweise eine Acrylsäureeinheit oder Salze davon dar.

$R^6$ steht unabhängig voneinander für H, $CH_3$, COOM oder $CH_2COOM$ oder einen Substituenten wie für $R^5$ definiert, vorzugsweise für H.

$R^5$ steht unabhängig voneinander für einen Rest der Formel (III)

$$-(CH_2)_x-R^7-(R^8O)_y-R^9 \qquad \text{(III)}$$

Dabei steht $R^7$ für ein Ester-, Amid oder Imid-Verbindungsstück, vorzugsweise für -COO- oder -CO-NH-. $R^8$ steht für eine $C_2$ - $C_6$ Alkylengruppe, vorzugsweise eine $C_2$ - $C_4$ Alkylengruppe oder eine Mischung von $C_2$, $C_3$ und/oder $C_4$ Alkylengruppen in einer beliebigen Reihenfolge; und $R^9$ steht für H, einen $C_1$ - $C_{12}$ Alkyl- oder Cycloalkylrest, einen $C_7$ - $C_{20}$ Alkylaryl-oder Aralkylrest, oder einen substituierten oder unsubstituierten Arylrest, oder einen einwertigen organischen Rest mit 1 bis 30 C-Atomen, welcher gegebenenfalls Heteroatome umfasst.

Der Index x weist unabhängig voneinander den Wert 0 oder 1 auf; und y steht unabhängig voneinander für den Wert 10 - 250, vorzugsweise für 20 bis 150.

In einer bevorzugten Ausführungsform steht $R^5$ für $-COO-(R^8O)_y-R^9$ oder $-CO-NH-(R^8O)_y-R^9$, insbesondere für $-COO-(R^8O)_y-R^9$, und $-(R^8O)_y$-steht für eine $C_2$ - $C_4$ Polyoxyalkylengruppe, insbesondere für eine Polyoxyethylengruppe oder eine Polyoxypropylengruppe oder Mischungen von Oxyethylen- und Oxypropyleneinheiten in irgendeiner möglichen Sequenz, beispielsweise zufällig, alternierend oder blockweise, und y steht für 10 bis 250, bevorzugt für 20 bis 150. Bei einem bevorzugten Polymer **P** sind mindestens 30 Mol-%, besonders bevorzugt 50 - 100 Mol-%, noch mehr bevorzugt 80 - 100 Mol-%, am meisten bevorzugt 100 Mol-% der Struktureinheit **B** der Formel (II) durch eine Struktur dargestellt bei der $R^8$ eine $C_2$-Alkylengruppe darstellt. Das heisst, $R^5$ umfasst vorzugsweise mindestens 30 Mol-% ($C_2H_4O$)-Einheiten, vorzugsweise 50 bis 100 Mol-% ($C_2H_4O$)-Einheiten, noch mehr bevorzugt 80 bis 100 Mol-% ($C_2H_4O$)-Einheiten, bezogen auf die Gesamtmolmenge aller ($R^8O$)-Einheiten. Insbesondere bevorzugt umfasst $R^5$ 100 Mol-% ($C_2H_4O$)-Einheiten, bezogen auf die Gesamtmolmenge aller ($R^8O$)-Einheiten. $R^9$ kann je nach Herstellverfahren des Polymers **P** für H, einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, stehen. Wird das Polymer **P** über die polymeranaloge Reaktion hergestellt, ist $R^9$ vorzugsweise ein Methylrest, und steht nicht für ein Wasserstoffatom.

Die weitere Struktureinheit **C** kann eine weitere Ether-, Ester, Amid-oder Imideinheit, vorzugsweise eine Amid- oder Estereinheit umfassen. Beispielsweise kann die weitere Struktureinheit C Carbonsäure-, Sulfonsäure-, Phosphorsäureester-, Phosphonsäure-, Carbonylamidomethylpropansulfonsäure und deren Alkali oder Erdalkalisalze, Poly(oxyalkylen)oxycarbonyl, Poly(oxyalkylen)aminocarbonyl, Poly(oxy-alkylen)oxyalkyl-, Poly(oxyalkylen)oxy-, Hydroxyethyloxycarbonyl-, Acetoxy-, Phenyl- oder *N*-Pyrrolidonylgruppen umfassen. Vorzugsweise umfasst die weitere Struktureinheit **C** Polyoxyalkylengruppen, vorzugsweise Polyoxyethylengruppen, Polyoxypropylengruppen oder Mischungen davon. Beispielsweise kann die Struktureinheit **C** eine Estereinheit sein, welche durch Umsetzung einer Mono- oder Dicarbonsäure mit einem Alkylalkohol, insbesondere einem $C_6$-$C_{20}$ Alkylalkohol hergestellt wird.

Ein besonders bevorzugtes Polyer **P** umfasst oder besteht aus

a') mindestens einer Säureeinheit **A** der Formel (I');

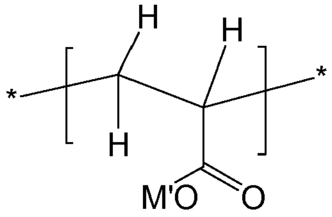

(I')

und

b') mindestens einer Struktureinheit **B** der Formel (II');

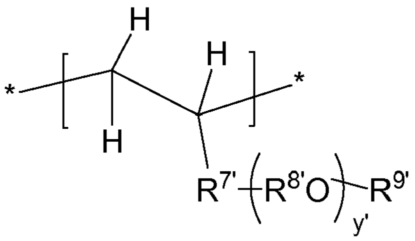

(II')

wobei M' ein H, Na, Ca/2, Mg/2, $NH_4$ oder ein organisches Ammonium, vorzugsweise ein H darstellt,
wobei $R^{7'}$ für COO oder CONH steht,
wobei $R^{8'}$ für eine Ethylengruppe steht,
wobei $R^{9'}$ für eine $C_1$ bis $C_{12}$ Alkylgruppe, vorzugsweise eine Methylgruppe steht,

wobei y' für 10 - 250, vorzugsweise 20 bis 150, insbesondere bevorzugt 60 bis 100, steht.

Das Polymer **P** kann eine Kombination von verschiedenen Struktureinheiten der jeweiligen Struktureinheiten von **A, B,** und gegebenenfalls **C** aufweisen. Beispielsweise können mehrere Struktureinheiten **A** gemischt im Polymer **P** vorkommen, so zum Beispiel ein Gemisch von Methacrylsäureeinheiten mit Acrylsäureeinheiten. Bevorzugt sind aber reine Acrylsäureeinheiten. Oder es können mehrere unterschiedliche Ester- oder Amideinheiten **B** gemischt im Polymer **P** vorkommen, so zum Beispiel mehrere Estereinheiten **B** mit verschiedenen Substituenten $R^{8'}$. Bevorzugt ist beispielsweise die gemeinsame Verwendung von Polyalkylenglykolen, insbesondere von Polyethylenglykolen mit Polypropylenglykolen, oder die gemeinsame Verwendung von Polyalkylenglykolen, insbesondere von Polyethylenglykolen, mit unterschiedlichem Molekulargewicht.

Handelt es sich bei dem Polymer **P** um ein Polymer **Pa,** so umfasst das Polymer **P** in einer bevorzugten Ausführungsform 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C,** jeweils bezogen auf die Gesamtmolmenge der Struktureinheiten von **A, B** und **C** im Polymer **P.** Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit **C** der Formel (III) um eine Struktureinheit der Formel (III').

Besonders bevorzugt umfasst das Polymer **P** im Fall von Polymer **Pa** 75 bis 98 Mol-%, noch mehr bevorzugt 85 bis 98 Mol-%, der Säureeinheit **A** der Formel (I), 2 bis 25 Mol-%, noch mehr bevorzugt 2 bis 15 Mol-%, der Struktureinheit **B** der Formel (II), und gegebenenfalls 0 bis 23 Mol-% der Struktureinheit **C,** jeweils bezogen auf die Gesamtmolmenge der Struktureinheiten von **A, B** und **C** im Polymer **P.** Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit **C** der Formel (III) um eine Struktureinheit der Formel (III').

Handelt es sich bei dem Polymer **P** um ein Polymer **Pb,** so umfasst das Polymer **P** in einer bevorzugten Ausführungsform 40 bis 99.5 Mol-%, vorzugsweise 50 bis 75 Mol-% der Säureeinheit **A** der Formel (I), 0.5 bis 60 Mol-%, vorzugsweise 20 bis 50 Mol-% der Struktureinheit **B** der Formel (II), und gegebenenfalls 0 bis 49 Mol-% der Struktureinheit **C,** jeweils bezogen auf die Gesamtmolmenge der Struktureinheiten von **A, B** und **C** im Polymer **P.** Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit C der Formel (III) um eine Struktureinheit der Formel (III').

Besonders bevorzugt umfasst das Polymer **P** im Fall von Polymer **Pb** 50 bis 70 Mol-%, noch mehr bevorzugt 53 bis 68 Mol-%, der Säureeinheit **A** der Formel (I), 25 bis 48 Mol-%, noch mehr bevorzugt 30 bis 45 Mol-%, der Struktureinheit **B** der Formel (II), und gegebenenfalls 0 bis 23 Mol-% der Struktureinheit **C,** jeweils bezogen auf die Gesamtmolmenge der Struktureinheiten von **A, B** und **C** im Polymer **P.** Vorzugsweise handelt es sich bei der Säureeinheit **A** der Formel (I) um eine Säureeinheit der Formel (I'), bei der Struktureinheit **B** der Formel (II) um eine Struktureinheit der Formel (II') und bei der Struktureinheit **C** der Formel (III) um eine Struktureinheit der Formel (III').

Die Abfolge der einzelnen Struktureinheiten **A, B,** und **C** im Polymer **P** kann alternierend, statistisch, blockweise oder zufällig sein.

Das Polymer **P** weist vorzugsweise ein Molekulargewicht $M_w$ im Bereich von 10'000 - 150'000 g/mol, vorzugsweise 15'000 - 100'000 g/mol, besonders bevorzugt 25'000-80'000 g/mol, auf.

Das Polymer **P** kann auf verschiedene Arten hergestellt werden. Es sind im Wesentlichen zwei Verfahren im Einsatz. In einem ersten Verfahren werden die Polymere in einer sogenannten polymeranalogen Umsetzung aus einem Polycarboxylat und den jeweiligen Alkoholen und/oder Aminen hergestellt. In einem zweiten Verfahren werden die Polymere aus den jeweiligen ungesättigten Carbonsäure-, und Ester- und/oder Amidfunktionenellen Monomeren durch radikalische Polymerisation hergestellt.

Besonders bevorzugte Polymere werden nach der polymeranalogen Reaktion gemäss dem ersten Verfahren hergestellt. Die polymeranaloge Umsetzung weist den grossen Vorteil auf, dass aus kommerziell erhältlichen Polymeren aus α-,β-ungesättigten Säuren, insbesondere aus Mono- oder Dicarbonsäuren, speziell aus Poly(meth)acrylsäuren, durch Variation der Menge, der Art und dem Verhältnis von Alkohol und Amin, in einfacher und sicherer Weise sehr unterschiedliche Kammpolymere mit sehr unterschiedlichen Eigenschaften erhalten werden können. Solche polymeranalogen Umsetzungen sind beispielsweise in WO97/35814A1, WO95/09821A2, DE 100 15 135A1, EP 1138697A1, EP1348729A1 sowie WO2005/090416A1 beschrieben. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Polymer **P** kann auch in festem Aggregatszustand erhalten werden, wie in EP 1 348 729 A1 auf Seite 3 bis Seite 5 sowie in dessen Beispielen beschrieben.

Es wird also bevorzugt ein Polymer **P** verwendet, wobei das Polymer **P** erhältlich ist durch die Reaktion von (a) mindestens einer Polycarbonsäure oder einem Analogon einer Polycarbonsäure; und (b) mindestens einer Monohydroxyverbindung **E** und/oder mindestens einer Monoaminverbindung **F** umfassend mindestens eine Polyoxyalkylengruppe, und gegebenenfalls (c) mindestens eine weitere Verbindung **D.**

Unter Polycarbonsäure oder Analogon einer Polycarbonsäure versteht man ein Homo- oder Copolymer, welches durch Polymerisation von mindestens einem Monomer **a** und gegebenenfalls mindestens einem Monomer **b** erhalten werden kann. Monomer **a** ist ausgewählt aus der Gruppe umfassend ungesättigte Monocarbonsäuren, ungesättigte Dicarbonsäuren, Analoga derselben und Mischungen derselben. Ungesättigte Mono- oder Dicarbonsäuren umfassen vorzugsweise Maleinsäure, Itaconsäure, Fumarsäure, Citraconsäure, Glutaconsäure, Mesaconsäure oder Crotonsäure, insbesondere Acrylsäure oder Methacrylsäure. Unter Analogon einer Mono-oder Dicarbonsäure oder Polycarbonsäure versteht man im Sinne der vorliegenden Erfindung Säuresalze, Säurehalogenide, Säureanhydride und Säureester, im besonderen Alkyl-Säureester.

Monomer **b** ist vorzugsweise ausgewählt aus der Gruppe von ethylenisch ungesättigten Monomeren umfassend α-β-ungesättigte Mono-oder Dicarbonsäuren, α-β-ungesättigte Mono- oder Dicarbonsäureester, α-β-ungesättigte Carboxylate, Styrol, Ethylen, Propylen, Vinylacetat insbesondere Methacrylsäure, Acrylsäure, Crotonsäure, Itaconsäure, Maleinsäure, Fumarsäure, sowie deren Salze, Ester und Mischungen davon.

Bevorzugt als Copolymer ist ein Copolymer aus Acrylsäure und Methacrylsäure sowie deren Salze oder Teilsalze.

Bevorzugt als Homopolymer ist Polyacrylsäure, deren Salze oder Teilsalze.

Die Polycarbonsäure oder das Analogon der Polycarbonsäure kann hierbei als freie Säure oder als Teilsalz vorliegen, wobei der Term "Salz" hier und im folgenden neben den klassischen Salzen, wie sie durch Neutralisation mit einer Base erhalten werden, auch komplexchemische Verbindungen zwischen Metallionen und den Carboxylat- oder Carboxyl-Gruppen als Liganden umfasst. Bei der Herstellung der Polycarbonsäure oder des Analogons der Polycarbonsäure sind allenfalls verwendete Initiatoren, CoInitiatoren und Polymerisationsregler gegebenenfalls so zu wählen, dass in Polymer **P** vorzugsweise keine reaktionsfähigen Hydroxyl- oder Aminfunktionen vorhanden sind.

Unter "Monohydroxy-Verbindung" wird hier und im folgenden eine Substanz verstanden, die nur eine freie Hydroxylgruppe aufweist.

Unter "Monoamin-Verbindung" wird hier und im folgenden eine Substanz verstanden, die nur eine freie Aminogruppe aufweist.

Das Homo- oder Copolymer der Polycarbonsäure oder des Anologons der Polycarbonsäure wird durch eine radikalische Polymerisation nach üblichen Verfahren erhalten. Sie kann in Lösungsmittel, bevorzugt in Wasser oder in Substanz, erfolgen. Diese radikalische Polymerisation erfolgt bevorzugt in Gegenwart von mindestens einem Molekulargewichtsregler, insbesondere einer anorganischen oder organischen Schwefelverbindung, wie beispielsweise Mercaptanen, oder einer Phosphorverbindung. Die Polymerisation erfolgt vorteilhaft unter derartigen Bedingungen, dass das gebildeten Homo- oder Copolymere aus 10 bis 250, bevorzugt 20 bis 100, mehr bevorzugt 25 bis 60, Monomerbausteinen aufgebaut ist. Solche Homo-oder Copolymere von (Meth)acrylsäure sind kommerziell erhältlich. Das Homooder Copolymer der Polycarbonsäure oder des Anologons der Polycarbonsäure weist vorzugsweise ein Molekulargewicht $M_w$ von 500 bis 20'000 g/mol, bevorzugt von 2'000 bis 10'000 g/mol, insbesondere bevorzugt von 3'500 bis 6'500 g/mol, auf.

Die Monohydroxy-Verbindung **E** ist vorzugsweise mit unter üblichen Reaktionsbedingungen nicht reaktiven Endgruppen einseitig abgeschlossen. Bevorzugt handelt es sich hierbei um ein Polymer mit einem Polyalkylenglykol-Grundgerüst. Die Monohydroxy-Verbindung **E** weist die Formel (IV) auf

$$HO\text{-}(R^{8''}O)_{y'''}\text{-}R^{9''} \qquad (IV)$$

wobei $R^{8''}$ unabhängig voneinander eine $C_2$ - $C_4$ Alkylengruppe bedeutet mit einer Reihenfolge der ($R^{8''}$O)-Einheiten in irgendeiner möglichen Sequenz; wobei $R^{9''}$ für einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht; und wobei y" unabhängig voneinander für 10 - 250, vorzugsweise 20 bis 150 steht.

Bevorzugt sind Monohydroxy-Verbindungen **E** der Formel (IV) mit einer Methyl-, Ethyl-, i-Propyl- oder n-Butylgruppe, insbesondere mit einer Methylgruppe, als Substituent $R^{9'}$. Vorzugsweise steht $R^{8'}$ unabhängig voneinander für eine $C_2$-Alkylengruppe und/oder eine $C_3$-Alkylengruppe. Bevorzugt handelt es sich bei **E** um Mischpolymerisate aus Ethylenoxid/Propylenoxid, mehr bevorzugt um einseitig endgruppenverschlossenes Polyethylenglykol.

Mischungen mehrerer unterschiedlicher Verbindungen der Gruppe **E** sind ebenfalls möglich. So können beispielsweise einseitig endgruppenverschlossene Polyethylenglykole mit unterschiedlichen Molekulargewichten gemischt werden, oder es können beispielsweise Mischungen von einseitig endgruppenverschlossenen Polyethylenglykolen mit einseitig endgruppenverschlossenen Mischpolymeren aus Ethylenoxid und Propylenoxid oder einseitig endgruppenverschlossenen Polypropylenglykolen verwendet werden.

Unter, mit unter üblichen Reaktionsbedingungen nicht reaktiven Endgruppen abgeschlossen' versteht man im Sinne der Erfindung, dass anstelle von für die Veresterung oder Amidierung reaktiven funktionellen Gruppen solche Gruppen vorhanden sind, welche nicht mehr zur Reaktion befähigt sind. Die üblichen Reaktionsbedingungen sind diejenigen, welche der Fachmann für Veresterungen und Amidierungen kennt. Bei, einseitig abgeschlossen' Verbindungen ist nur eine Seite nicht mehr zur Reaktion fähig.

In einer bevorzugten Ausführungsform ist die Monohydroxy-Verbindung **E** ein einseitig endgruppenverschlossenes Polyalkylenglykol mit einem Molekulargewicht $M_w$ von 500 bis 10'000 g/mol, insbesondere von 2000 bis 8000 g/mol, bevorzugt von 2000 bis 6000 g/mol. Geeignet ist auch eine Mischung von einseitig endgruppenverschlossenen Polyalkylenglykolen mit unterschiedlichem Molekulargewicht, beispielsweise die Mischung von Polyalkylenglykolen mit einem Molekulargewicht von 1'000 g/mol mit Polyalkylenglykolen mit einem Molekulargewicht von 5'000 g/mol.

Zusätzlich zur Monohydroxy-Verbindung **E** oder anstelle der Monohydroxy-Verbindung **E** kann im ersten Verfahren eine Monoaminverbindung **F** eingesetzt werden. Dadurch erfolgt die Bildung von Amidgruppen.

Typische Beispiele solcher Monoaminverbindungen **F** lassen sich durch die Formel (V) darstellen

$$NH_2\text{-}(R^8O)_y\text{-}R^9 \qquad (V)$$

Die Substituenten $R^8$ und $R^9$ beziehungsweise der Index y weisen unabhängig voneinander dieselben Bedeutungen auf wie sie bereits für die Formel (III) definiert wurden.

Beispiele für solche Monoaminverbindungen **F** sind α-Methoxy-ω-Amino-Polyoxyethylen, α-Methoxy-ω-Amino-Polyoxypropylen, α-Methoxy-ω-Am ino-Oxyethylene-Oxypropylen-Copolymer.

Besonderes bevorzugt als Monoaminverbindungen **F** sind α-Methoxyw-Amino-Oxyethylen-Oxypropylen-Copolymere, wie beispielsweise Jeffamin® M-2070, oder α-Methoxy-ω-Amino-Polyoxyethylene, sowie andere Monoamine, welche beispielsweise von der Firma Huntsman unter dem Namen Jeffamine® der M-Serie vertrieben werden, sowie Mischungen davon. Meist bevorzugt sind α-Methoxy-ω-Amino-Oxyethylen-Oxypropylen-Copolymere. Solche Monoaminverbindungen **F** sind beispielsweise erhältlich aus einer mit Alkohol gestarteten Polymerisation von Ethylen- und/ oder Propylenoxid gefolgt von Umwandlung der terminalen Alkoholgruppe in eine Amingruppe

Als weitere Verbindung **D** ist eine Verbindung bevorzugt, welche mit der Polycarbonsäure oder dem Analogon der Polycarbonsäure eine Reaktion eingehen kann. Beispiele für eine Verbindung **D** sind weitere Amine oder Alkohole, beispielsweise ein $C_6$-$C_{20}$ Alkylalkohol oder ein weiteres Mono- oder Diamin. Es können auch mehrere verschiedene Verbindungen **D** eingesetzt werden.

Die Umsetzung der Polycarbonsäure oder dem Analogon der Polycarbonsäure mit mindestens einer Monohydroxy-Verbindung **E** und/oder mit mindestens einer Monoaminverbindung **F,** und gegebenenfalls einer Verbindung

**D** zu einem Polymer **P** erfolgt bei der polymeranalogen Reaktion typischerweise derart, dass zur Polycarbonsäure oder dem Analogon der Polycarbonsäure unter Rühren die mindestens eine Monohydroxy-Verbindung **E** und/oder die mindestens eine Monoaminverbindung **F** zugegeben wird und auf die Umsetzungstemperatur aufgeheizt wird. Die Mischung wird weitergerührt und eventuell unter Vakuum oder durch Über- oder Durchleiten eines Gasstromes über beziehungsweise durch die Reaktionsmasse umgesetzt. Die Temperatur für diese Umsetzung ist beispielsweise zwischen 140°C und 200°C. Die Reaktion ist aber auch bei Temperaturen zwischen 150°C und 175°C möglich. Falls zusätzlich zur Monohydroxy-Verbindung **E** eine Monoaminverbindung **F** eingesetzt wird, kann deren Zugabe gleichzeitig mit der Monohydroxy-Verbindung **E** oder aber zu einem späteren Zeitpunkt während dieses Reaktionsschrittes erfolgen.

In einer bevorzugten Ausführungsform wird diese Umsetzung in Gegenwart eines Veresterungskatalysators, insbesondere einer Säure durchgeführt. Bevorzugt handelt es sich bei einer solchen Säure um Schwefelsäure, p-Toluolsulfonsäure, Benzolsulfonsäure, Methansulfonsäure, Phosphorsäure oder phosphorige Säure. Bevorzugt ist Schwefelsäure. Die Entfernung des Wassers aus der Reaktionsmischung kann unter Atmosphärendruck aber auch unter Vakuum erfolgen. Auch kann ein Gasstrom über oder durch die Reaktionsmischung geführt werden. Als Gasstrom kann Luft oder Stickstoff verwendet werden.

Die Umsetzung kann mittels Messung der Säurezahl, beispielsweise durch Titration, verfolgt werden und bei einer gewünschten Säurezahl, so dass der gewünschte Säuregehalt erreicht wird, abgebrochen werden. Die Reaktion wird durch Aufheben des Vakuums und Abkühlen abgebrochen.

In einer bevorzugten Ausführungsform wird eine Polyacrylsäure mit einem Polyethylenglykol welches einseitig mit einer Methylgruppe abgeschlossen ist, verestert und/oder mit einem Monoamin umgesetzt.

Bei der sogenannten polymeranalogen Reaktion können neben Estergruppen und gegebenenfalls Amidgruppen auch Anhydridgruppen gebildet werden, welche in einem zweiten Schritt vollständig oder teilweise mit einer Aminverbindung zu einem Amid umgesetzt werden können. Solche Verfahren werden beispielsweise in WO2005/090416A1 beschrieben.

In einem zweiten Herstellverfahren wird das Polymer **P** über die radikalische Polymerisation hergestellt. Der Weg über die radikalische Polymerisation ist die gängigste Methode, sie ist allerdings bei speziellen Verbindungen erschwert durch die kommerzielle Verfügbarkeit der entsprechenden Monomere und bedarf einer aufwändigen Prozesskontrolle.

Das Polymer **P** ist beispielsweise erhältlich d u rc h die Polymerisationsreaktion in Gegenwart von mindestens einem Radikalbildner von

(a) mindestens einem ethylenisch ungesättigten Monomer **MM,** welches ausgewählt ist aus der Gruppe bestehend aus ungesättigten Monooder Dicarbonsäuren, ungesättigten Sulfonsäuren, ungesättigten Phosphorsäuren, ungesättigten Phosphonsäuren oder deren Salze; mit

(b) mindestens einem ethylenisch ungesättigten Carbonsäurederivat **H** der Formel (VI);

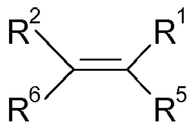

(VI)

und gegebenenfalls

(c) mindestens einer weiteren ethylenisch ungesättigten Verbindung **L**.

Die Substituenten $R^1$, $R^2$, $R^5$, und $R^6$ weisen unabhängig voneinander je dieselben Bedeutungen auf, wie sie bereits für die Formel (II) beschrieben wurden.

Das ethylenisch ungesättigte Monomer **MM** ist vorzugsweise eine Mono- oder Dicarbonsäure oder das Salz der ungesättigten Mono- oder Dicarbonsäure. Vorzugsweise ist die Mono- oder Dicarbonsäure Acrylsäure oder Methacrylsäure, Maleinsäure, Itaconsäure, Fumarsäure, Citraconsäure, Glutaconsäure, Mesaconsäure oder Crotonsäure, insbesondere Acrylsäure oder Methacrylsäure. Besonders bevorzugt ist die Acrylsäure.

Das mindestens eine ethylenisch ungesättigte Carbonsäurederivat **H** der Formel (VI) ist vorzugsweise ein Carbonsäureester oder ein Carbonsäureamid, besonders bevorzugt ein Acrylsäureester oder ein Methacrylsäureester. Bevorzugte Beispiele für solche Ester sind Polyalkylenglykolacrylate. Es können mehrere Monomere der Formel (VI) mit verschiedenen Substituenten $R^5$ in Kombination miteinander verwendet werden. Bevorzugt ist beispielsweise die gemeinsame Verwendung von Polyalkylenglykolen, insbesondere von Polyethylenglykolen, mit unterschiedlichem Molekulargewicht. Beispiele für geeignete Carbonsäureamide können Amide von ethylenisch ungesättigten Mono- oder Dicarbonsäuren mit Aminverbindungen sein. Besonders bevorzugt sind Amide der (Meth)acrylsäure, vorzugsweise die

Polyoxyalkylenmonoamide. Besonders bevorzugte Amid-Monomere sind die Alkylpolyalkylenglycol(meth)acrylamide, besonders bevorzugt die Methylpolyethylenglycol(meth)acrylamide, die Methylpolyethylenglycolpolypropylenglycol(meth)acrylamide oder die Methylpolypropylenglycol(meth)acrylamide. Es können ein oder mehrere dieser ungesättigten Carbonsäureamide verwendet werden.

Die weitere ethylenisch ungesättigte Verbindung **L** ist vorzugsweise ein Carbonsäureester oder -amid, besonders bevorzugt ein Acrylsäureester- oder amid oder ein Methacrylsäureester oder amid. Beispiele für solche Ester oder Amide sind Polyoxyalkylen(meth)acrylate. Es können mehrere verschiedene Verbindungen **L** in Kombination miteinander verwendet werden. Geeignet sind beispielsweise Mono- oder Di-hydroxyethyl(meth)acrylamid, Mono- oder Dihydroxypropyl(meth)acrylamid, Mono- oder Di-cyclohexyl(meth)acrylamid oder N-Alkyl,-N-hydroxyethyl(meth)acrylamide oder N-Alkyl,-N-hydroxypropyl-(meth)acrylamide.

Die Polymermischung umfassend mindestens ein Polymer **Pa** und mindestens ein Polymer **Pb** kann zur erfindungsgemässen Verwendung sowohl in flüssiger als auch in fester Form, sowohl allein oder als Bestandteil eines Dispergiermittels, insbesondere eines Verflüssigers verwendet werden.

Die Polymermischung umfassend mindestens ein Polymer **Pa** und mindestens ein Polymer **Pb** kann somit für die erfindungsgemässe Verwendung als Dispergiermittel für Gipszusammensetzungen als Mischung im Wesentlichen bestehend aus Polymer **Pa** und Polymer **Pb** verwendet werden, insbesondere beträgt der Gewichtsanteil von Polymer **Pa** und Polymer **Pb** zusammen mehr als 80 Gew.-%, vorzugsweise mehr als 90 Gew.-%, bezogen aus das Gesamtgewicht der Polymermischung.

Die Polymermischung umfassend mindestens ein Polymer **Pa** und mindestens ein Polymer **Pb** kann jedoch auch als Mischungen mit anderen Dispergiermitteln, Dispergiermittelmischungen vorkommen oder weitere Bestandteile enthalten. Beispiele für weitere Bestandteile sind Lösungsmittel oder Additive, wie andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Schwindreduzierer, Entschäumer, oder Schaumbildner.

Wenn die Polymermischung umfassend mindestens ein Polymer **Pa** und mindestens ein Polymer **Pb** in flüssiger Form verwendet wird, wird für die Umsetzung vorzugsweise ein Lösungsmittel eingesetzt. Bevorzugte Lösungsmittel sind beispielsweise Alkohole, insbesondere Ethanol oder Isopropanol, und Wasser, wobei Wasser das am meist bevorzugte Lösungsmittel ist.

Die Polymermischung umfassend mindestens ein Polymer **Pa** und mindestens ein Polymer **Pb** kann auch in festem Aggregatszustand vorliegen. Unter Polymere im festen Aggregatszustand versteht man im Sinne der Erfindung Polymere, die bei Raumtemperatur im festen Aggregatzustand vorliegen und beispielsweise Pulver, Schuppen, Pellets, Granulate oder Platten sind und sich in dieser Form problemlos transportieren und lagern lassen.

Die Polymermischung umfassend mindestens ein Polymer **Pa** und mindestens ein Polymer **Pb** wird bevorzugt in einer Menge von 0.01 bis 10 Gew.-%, bezogen auf das Gewicht des mineralischen Bindemittels, verwendet, um in der Gipszusammensetzung die gewünschte Wirkung zu erzielen. Die erwähnte Menge von 0.01 bis 10 Gew.-% bezieht sich auf das Gesamtgewicht von Polymer **Pa** zusammen mit Polymer **Pb.**

In einem weiteren Aspekt betrifft die vorliegende Erfindung ein mineralisches Bindemittel enthaltendes Gemisch umfassend mindestens 30 Gew.-% Gips, bezogen auf das Gesamtgewicht des mineralischen Bindemittels und eine Polymermischung umfassend mindestens ein Polymer **Pa** und mindestens ein Polymer **Pb.** Die Polymere **Pa** und **Pb** wurden bereits vorgängig beschrieben.

Besonders geeignet ist die Polymermischung umfassend mindestens ein Polymer **Pa** und mindestens ein Polymer **Pb** zur Verwendung in einem mineralischen Bindemittel enthaltenden Gemisch umfassend Calciumsulfat-β-Halbhydrat zur Verwendung in Gipsplatten, insbesondere für Gipskartonplatten.

Das mineralische Bindemittel enthaltende Gemisch enthält mindestens 30 Gew.-%, bevorzugt mindestens 50 Gew.-%, am meisten bevorzugt mindestens 70 Gew.-%, Gips, insbesondere Calciumsulfat-β-Halbhydrat, bezogen auf das Gesamtgewicht des mineralischen Bindemittels. Das mineralische Bindemittel kann weitere minderalische Bindemittel, beispielsweise hydraulisch abbindende Substanzen, enthalten, wie beispielsweise Zement, insbesondere Portlandzemente oder Tonerdeschmelzzemente und respektive deren Mischungen mit Flugaschen, Silica fume, Schlacke, Hüttensande und Kalksteinfiller oder gebrannter Kalk.

Weiterhin kann das Gemisch weitere Zusätze, wie beispielsweise Fasern, sowie als Additive übliche Bestandteile wie beispielsweise andere Verfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Verzögerer, Stärke, Zucker, Silikone, Schwindreduzierer, Entschäumer, oder Schaumbildner enthalten.

Besonders bevorzugt ist ein mineralisches Bindemittel enthaltendes Gemisch umfassend eine Polymermischung umfassend mindestens ein Polymer **Pa** und mindestens ein Polymer **Pb,** Calciumsulfat-β-Halbhydrat und mindestens einen Beschleuniger, sowie weitere Zusätze wie sie für die Herstellung einer Gipsplatte üblich sind.

In einem weiteren Aspekt betrifft die vorliegende Erfindung die Verwendung einer Polymermischung umfassend mindestens ein Polymer **Pa** und mindestens ein Polymer **Pb,** wie sie als Polymermischung vorgehend beschrieben ist, zur Herstellung von Gips-Formkörpern.

Unter dem Begriff "Formkörper" wird jeder ausgehärtete Gegenstand bezeichnet, der eine dreidimensionale Ausdehnung aufweist. Das Aushärten des Formkörpers erfolgt durch Trocknen im Ofen oder an der Luft.

Der erfindungsgemäße Formkörper kann ein beweglicher Gegenstand sein, beispielsweise eine Gipsplatte oder eine Skulptur. Der erfindungsgemäße Formkörper kann jedoch auch eine Füllung oder Beschichtung sein, beispielsweise ein Gipsputz, ein Bodenbelag oder Estrich, oder ein beliebiges Produkt, das bei der Verteilung und Aushärtung von Spachtelmasse entsteht, beispielsweise die Füllung eines Hohlraums oder einer Fuge.

In einem weiteren Aspekt betrifft die vorliegende Erfindung ein Dispergiermittel für eine Gipszusammensetzung enthaltend:

(i) 1 bis 95 Gew.% einer Polymermischung umfassend mindestens ein Polymer **Pa** und mindestens ein Polymer **Pb,** wie sie als Polymermischung vorgehend beschrieben ist, und
(ii) 0 bis 95 Gew.% Wasser.

**Beispiele**

Die Erfindung wird nun anhand von Beispielen näher erläutert.

1. Verwendete Polymere **P**

Es wurden die in Tabelle 1 angegebenen Polymere ***P-1***, ***P-2***, ***P-3*** und ***P-4*** mittels polymeranaloger Umsetzung aus Polyacryl-, Polymethacryl- oder einer Polyacrylmethacrylsäure mit einseitig mit Methylgruppen endgruppenverschlossenen Polyethylenglykolen mit einem Molekulargewicht von 500 - 5000 g/mol nach bekannter Art und Weise hergestellt. Details zur polymeranalogen Umsetzung sind offenbart beispielsweise in EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in dessen Beispielen. Bei dem Polymer ***P-1*** handelt es sich um ein Polymer **Pa,** bei den Polymeren ***P-2, P-3*** und ***P-4*** handelt es sich um Polymere **Pb.**

Tabelle 1 Polymere ***P-1, P-2, P-3*** und ***P-4*** enthalten die Struktureinheiten **A** der Formel (I) und die Struktureinheiten **B** der Formel (II) mit $R^2$=H, $R^3$=H, $R^4$=COOM, $R^6$=H, M= $H^+$, $Na^+$; **SG** = Säuregehalt, n.b. bedeutet nicht bekannt

| **Nr.** | **$R^1$** | **Mw** | **Mol-%** | **SG,** mmol / 1g Polymer |
|---|---|---|---|---|
| ***P-1*** | -H | 30'000 | m = 84.8<br>n=15.2<br>0=0 | 2.01 |
| ***P-2*** | -CH3 | 45'000 | m = 62.5<br>n = 37.5<br>0=0 | 0.97 |
| ***P-3*** | -H/-CH3 | n.b | m = 59.8<br>n = 40.2<br>o=0 | 1.25 |
| ***P-4*** | -H | 40'000 | m = 61.5<br>n = 38.5<br>o=0 | 0.99 |

2. Fliessverhalten im Calciumsulfat-β-Halbhydrat

Für einen Gipsslurry wurden die in Tabelle 4 für den jeweiligen Gips beschriebene Menge Wasser mit 0.2 Gew.-% (Gesamtgewicht Polymere **Pa** und **Pb**) Polymerlösung (***PL***), bezogen auf das Gesamtgewicht des Calciumsulfat-β-Halbhydrat, vorgelegt. Bei den Polymerlösungen ***PL3- PL7, PL9-PL13, PL15-PL19*** handelt es sich um erfindungsgemässe Polymerlösungen, bei ***PL1, PL2, PL8*** sowie ***PL14*** handelt es sich um Vergleichsbeispiele. Danach wurde Calciumsulfat-β-Halbhydrat, 0.1 Gew.-% bezogen auf das Gesamtgewicht des Calciumsulfat-β-Halbhydrates eines Beschleunigers aus Calciumsulfat-Dihydrat, (beispielsweise erhältlich bei Fluka) innerhalb von 15 Sekunden in das Wasser eingestreut und der Gipsslurry 15 Sekunden sumpfen gelassen. Anschliessend wurde 30 Sekunden von Hand intensiv gerührt. Der Minikonus mit einem Durchmesser von 50mm und einer Höhe von 51 mm wurde gefüllt und nach 75

Sekunden das Ausbreitmass (ABM) in Millimeter bestimmt. Der Durchmesser des sich bildenden Gipskuchens wurde gemessen, sobald kein Fliessen mehr beobachtet wurde. Der Durchmesser in mm wurde als Ausbreitmass bezeichnet. Der Versteifungsbeginn und das Versteifungsende wurden mit der Messerschnittmethode nach DIN EN 13279-2 und der Daumendruckmethode bestimmt. Der Versteifungsbeginn (VB) ist erreicht, wenn nach einem Messerschnitt durch den Gips-Kuchen die Schnittränder nicht mehr zusammenlaufen. Das Versteifungsende ist eingetreten (VE), wenn bei einem Fingerdruck mit einem Druckaufwand von ca. 5 kg kein Wasser mehr aus dem Gips-Kuchen austritt.

Bei den Gipszusammensetzungen (***Z***) ***Z3-Z6, Z8-Z11, Z13-Z16, Z19-23, Z25-Z29, Z31-35, Z38, Z40-Z44, Z46, Z48*** und ***Z49*** handelt es sich um erfindungsgemässe Gipszusammensetzungen, bei ***Z1, Z2, Z7, Z12, Z17, Z18, Z24, Z30, Z36, Z37, Z39, Z45,*** sowie ***Z47*** handelt es sich um Vergleichsbeispiele.

Tabelle 2: Polymerlösungen, Anteil der Polymere ***P-1, P-2, P-3*** und ***P-4*** in Gew.-% bezogen auf das Gesamtgewicht des Calciumsulfat-β-Halbhydrat.

| Polymer-Lösung | **Pa** | **Pb** | | | **Pa: Pb** |
|---|---|---|---|---|---|
| | ***P-1*** (Gew.-%) | ***P-2*** (Gew.-%) | ***P-3*** (Gew.-%) | ***P-4*** (Gew.-%) | |
| ***PL1*** | 0.2 | | | | 100:0 |
| ***PL2*** | | 0.2 | | | 0:100 |
| ***PL3*** | 0.18 | 0.02 | | | 90:10 |
| ***PL4*** | 0.16 | 0.04 | | | 80:20 |
| ***PL5*** | 0.14 | 0.06 | | | 70:30 |
| ***PL6*** | 0.12 | 0.08 | | | 60:40 |
| ***PL7*** | 0.10 | 0.10 | | | 50:50 |
| ***PL8*** | | | 0.2 | | 0:100 |
| ***PL9*** | 0.18 | | 0.02 | | 90:10 |
| ***PL10*** | 0.16 | | 0.04 | | 80:20 |
| ***PL11*** | 0.14 | | 0.06 | | 70:30 |
| ***PL12*** | 0.12 | | 0.08 | | 60:40 |
| ***PL13*** | 0.10 | | 0.10 | | 50:50 |
| ***PL14*** | | | | 0.2 | 0:100 |
| ***PL15*** | 0.18 | | | 0.02 | 90:10 |
| ***PL16*** | 0.16 | | | 0.04 | 80:20 |
| ***PL17*** | 0.14 | | | 0.06 | 70:30 |
| ***PL18*** | 0.12 | | | 0.08 | 60:40 |
| ***PL19*** | 0.10 | | | 0.10 | 50:50 |

Tabelle 3: Ausbreitmass (ABM) in mm und Versteifungsbeginn/-ende in Minuten (min) und Sekunden (sec)

| Gipszusammensetzung | Polymerlösung | Gips | V-Beginn (min:sec) | V-Ende (min:sec) | ABM 2 min |
|---|---|---|---|---|---|
| ***Z1*** | ***PL1*** | 1 | 04:00 | 10:46 | 198 |
| ***Z2*** | ***PL2*** | 1 | 03:11 | 08:20 | 171 |
| ***Z3*** | ***PL3*** | 1 | 03:20 | 09:30 | 202 |
| ***Z4*** | ***PL4*** | 1 | 03:50 | 10:10 | 199 |
| ***Z5*** | ***PL6*** | 1 | 03:30 | 10:00 | 198 |

(fortgesetzt)

| Gipszusam mensetzung | Polymerlösung | Gips | V-Beginn (min:sec) | V-Ende (min:sec) | ABM 2 min |
|---|---|---|---|---|---|
| ***Z6*** | ***PL7*** | 1 | 03:10 | 10:05 | 186 |
| ***Z7*** | ***PL8*** | 1 | 03:03 | 08:30 | 167 |
| ***Z8*** | ***PL9*** | 1 | 04:00 | 10:40 | 201 |
| ***Z9*** | ***PL11*** | 1 | 03:50 | 09:40 | 200 |
| ***Z10*** | ***PL12*** | 1 | 03:31 | 08:40 | 192 |
| ***Z11*** | ***PL13*** | 1 | 03:19 | 08:40 | 184 |
| ***Z12*** | ***PL14*** | 1 | 03:15 | 08:30 | 177 |
| ***Z13*** | ***PL15*** | 1 | 03:50 | 10:00 | 205 |
| ***Z14*** | ***PL17*** | 1 | 03:56 | 10:20 | 198 |
| ***Z15*** | ***PL18*** | 1 | 03:40 | 09:35 | 198 |
| ***Z16*** | ***PL19*** | 1 | 03:42 | 09:30 | 187 |
| ***Z17*** | ***PL1*** | 2 | 05:35 | 14:30 | 191 |
| ***Z18*** | ***PL2*** | 2 | 03:00 | 09:30 | 146 |
| ***Z19*** | ***PL3*** | 2 | 04:30 | 12:33 | 191 |
| ***Z20*** | ***PL4*** | 2 | 04:57 | 13:00 | 196 |
| ***Z21*** | ***PL5*** | 2 | 04:21 | 11:45 | 192 |
| ***Z22*** | ***PL6*** | 2 | 04:27 | 11:05 | 180 |
| ***Z23*** | ***PL7*** | 2 | 03:40 | 10:38 | 180 |
| ***Z24*** | ***PL8*** | 2 | 02:50 | 09:05 | 147 |
| ***Z25*** | ***PL9*** | 2 | 04:42 | 13:20 | 199 |
| ***Z26*** | ***PL10*** | 2 | 04:15 | 12:15 | 195 |
| ***Z27*** | ***PL11*** | 2 | 04:10 | 10:45 | 202 |
| ***Z28*** | ***PL12*** | 2 | 03:40 | 10:40 | 188 |
| ***Z29*** | ***PL13*** | 2 | 03:42 | 10:37 | 184 |
| ***Z30*** | ***PL14*** | 2 | 03:00 | 09:30 | 146 |
| ***Z31*** | ***PL15*** | 2 | 05:00 | 13:40 | 198 |
| ***Z32*** | ***PL16*** | 2 | 05:00 | 13:50 | 201 |
| ***Z33*** | ***PL17*** | 2 | 04:30 | 12:00 | 195 |
| ***Z34*** | ***PL18*** | 2 | 04:10 | 11:35 | 196 |
| ***Z35*** | ***PL19*** | 2 | 04:00 | 11:10 | 191 |
| ***Z36*** | ***PL1*** | 3 | 06:40 | 16:22 | 200 |
| ***Z37*** | ***PL2*** | 3 | 04:40 | 14:40 | 175 |
| ***Z38*** | ***PL5*** | 3 | 05:45 | 14:55 | 205 |
| ***Z39*** | ***PL8*** | 3 | 04:40 | 14:05 | 173 |
| ***Z40*** | ***PL9*** | 3 | 06:25 | 14:59 | 200 |
| ***Z41*** | ***PL10*** | 3 | 06:34 | 14:59 | 203 |
| ***Z42*** | ***PL11*** | 3 | 06:11 | 15:34 | 204 |

(fortgesetzt)

| Gipszusam mensetzung | Polymerlösung | Gips | V-Beginn (min:sec) | V-Ende (min:sec) | ABM 2 min |
|---|---|---|---|---|---|
| ***Z43*** | ***PL12*** | 3 | 05:45 | 14:00 | 200 |
| ***Z44*** | ***PL13*** | 3 | 05:40 | 14:00 | 190 |
| ***Z45*** | ***PL14*** | 3 | 05:30 | 14:40 | 174 |
| ***Z46*** | ***PL17*** | 3 | 05:40 | 14:58 | 203 |
| ***Z47*** | ***PL1*** | 4 | 05:40 | 14:20 | 209 |
| ***Z48*** | ***PL4*** | 4 | 05:00 | 12:50 | 215 |
| ***Z49*** | ***PL10*** | 4 | 05:05 | 13:51 | 210 |

Tabelle 4: Verwendete Stuckgipse (enthält vorwiegend beta-Halbhydrat $CaSO_4$ x 0.5 $H_2O$) 1-4, Herstellungsart (REA = Gips aus Rauchentschwefelungsanlagen), Herkunft und Wasser-Bindemittel-Wert.

| Gips Nr. | Gipsart | Herkunft | Land | Wasser/ Bindemittel -Verhältnis |
|---|---|---|---|---|
| 1 | Gemisch aus Natur- und REA-Stuckgips | Iphofen | Deutschland | 0.6 |
| 2 | Natur-Stuckgips | Voskressensk | Russische Föderation | 0.55 |
| 3 | Natur-Stuckgips | Samara | Russische Föderation | 0.58 |
| 4 | REA-Stuckgips | Spremberg | Deutschland | 0.7 |

Tabelle 3 zeigt, dass bei einem erfindungsgemässen Verhältnis von **Pa** zu **Pb** einerseits der stark verzögerte Versteifungsbeginn / -ende im Vergleich zu **Pa** alleine in allen Beispielen verkürzt wurde.

Andererseits wird das Ausbreitmass und somit die Verarbeitbarkeit und die Fliessfähigkeit der Gipszusammensetzungen gegenüber der alleinigen Verwendung von **Pb** stark verbessert, insbesondere bei einem Verhältnis von 90 : 10 bis 70 : 10 wird ein Ausbreitmass von **Pa** alleine erreicht oder sogar übertroffen.

Überraschenderweise zeigt sich dieses Verhalten sowohl bei Stuckgipsen verschiedenster geographischer Herkunft (Deutschland, Russische Föderation) als auch bei Gipsen unterschiedlicher Herstellungsart (Naturgips, REA-Gips).

## Patentansprüche

**1.** Verwendung einer Polymermischung umfassend mindestens ein Polymer **Pa** und mindestens ein Polymer **Pb** als Dispergiermittel für Gipszusammensetzungen, wobei es sich bei den Polymeren **Pa** und **Pb** je um ein Polymer **P** handelt, wobei das Polymer **P** aufweist:

a) eine Hauptkette enthaltend Kohlenwasserstoffgruppen,
b) mindestens eine Seitenkette umfassend mindestens eine Säuregruppe, ausgewählt aus der Gruppe bestehend aus Carbonsäuregruppe, Sulfonsäuregruppe, Phosphonsäuregruppe, Phosphorsäuregruppe oder ein Salz davon, und
c) mindestens eine Seitenkette umfassend mindestens eine Polyoxyalkylengruppe, wobei die Polyoxyalkylengruppe über ein Verbindungsstück, welches mindestens eine Ester-, Amid- oder Imidgruppe umfasst, an die Hauptkette gebunden ist;

und wobei der Säuregehalt des Polymers **Pa** 1.5 bis 4, bevorzugt 1.7 bis 3.5 mmol Säuregruppen pro 1 g Polymer beträgt und der Säuregehalt des Polymers **Pb** 0.5 bis 1.4, bevorzugt 0.9 bis 1.2 mmol Säuregruppen pro 1 g Polymer beträgt,

und wobei das Gewichtsverhältnis von Polymer **Pa :** Polymer **Pb** 50-95 : 5-50, vorzugsweise 60-90 : 10-40, insbesondere bevorzugt 70-90 : 10-30, beträgt,
wobei die Gipszusammensetzung eine Zusammensetzung aus mineralischen Bindemitteln ist, welche mindestens 30 Gew.-% Gips enthält, bezogen auf das Gesamtgewicht des mineralischen Bindemittels.

**2.** Verwendung gemäss Anspruch 1, **dadurch gekennzeichnet, dass** die Gipszusammensetzung mindestens 50 Gew.-%, bevorzugt mindestens 70 Gew.-% Gips enthält, bezogen auf das Gesamtgewicht des mineralischen Bindemittels.

**3.** Verwendung gemäss Anspruch 1 oder 2, **dadurch gekennzeichnet, dass** Gips Calciumsulfat-β-Halbhydrat bedeutet.

**4.** Verwendung gemäss einem der vorhergehenden Ansprüche, **dadurch gekennzeichnet, dass** der Gewichtsanteil der Summe von Polymer **Pa** und Polymer **Pb** zusammen 0.005 - 5 Gew.-%, bevorzugt 0.05 - 0.5 Gew.-% beträgt, bezogen auf das Gesamtgewicht des mineralischen Bindemittels.

**5.** Verwendung gemäss einem der vorhergehenden Ansprüche, **dadurch gekennzeichnet, dass** die Säuregruppe in b) eine Carbonsäuregruppe ist.

**6.** Verwendung gemäss einem der vorhergehenden Ansprüche, **dadurch gekennzeichnet, dass** das Polymer **P** ein Molekulargewicht $M_w$ im Bereich von 10'000 - 150'000 g/mol, vorzugsweise 15'000 - 100'000 g/mol, besonders bevorzugt 25'000-80'000 g/mol, aufweist.

**7.** Verwendung gemäss einem der vorhergehenden Ansprüche, **dadurch gekennzeichnet, dass** die mindestens eine Polyoxyalkylengruppe eine Polyoxyethylengruppe ist oder umfasst.

**8.** Verwendung gemäss einem der vorhergehenden Ansprüche, **dadurch gekennzeichnet, dass** das Polymer **P** umfasst:

a') mindestens eine Säureeinheit **A** der Formel (I);

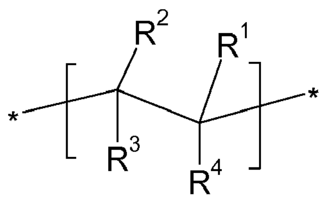

(I)

b') mindestens eine Struktureinheit **B** der Formel (II);

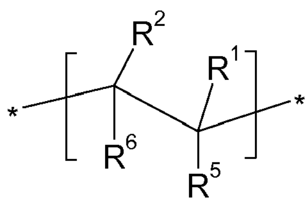

(II)

und gegebenenfalls
c') mindestens eine weitere Struktureinheit **C;**

wobei $R^1$ und $R^2$ je unabhängig voneinander für H, COOM, $CH_2COOM$ oder eine Alkylgruppe mit 1 bis 5 Kohlenstoffatomen stehen,
wobei $R^3$ unabhängig voneinander für H, $CH_3$, COOM oder $CH_2COOM$ steht; und
wobei $R^4$ unabhängig voneinander für einen Rest der Carbonsäure, Sulfonsäure, Phosphorsäure oder Phosphonsäure oder einem Salz davon steht;
oder wobei $R^3$ mit $R^4$ einen Ring bildet zu -CO-O-CO-;

wobei M für H, Alkalimetall, Erdalkalimetall, Ammonium, Ammoniumkation, oder Mischungen davon steht; wobei $R^5$ unabhängig voneinander für einen Rest der Formel (III) steht

$$-(CH_2)_x-R^7-(R^8O)_y-R^9 \qquad (III)$$

wobei $R^7$ für ein Ester-, Amid- oder Imid-Verbindungsstück, vorzugsweise für -COO- oder -CO-NH- steht;
wobei $R^8$ für eine $C_2$ - $C_6$ Alkylengruppe, vorzugsweise eine $C_2$ - $C_4$ Alkylengruppe oder eine Mischung davon steht,
wobei $R^9$ für H, einen $C_1$ - $C_{12}$ Alkyl- oder Cycloalkylrest, einen $C_7$ - $C_{20}$ Alkylaryl- oder Aralkylrest, oder einen substituierten oder unsubstituierten Arylrest, oder einen einwertigen organischen Rest mit 1 bis 30 C-Atomen, welcher gegebenenfalls Heteroatome umfasst, steht;
wobei x unabhängig voneinander für den Wert 0 oder 1 stehen;
wobei y unabhängig voneinander für den Wert 10 - 250 steht;
und wobei $R^6$ unabhängig voneinander für H, $CH_3$, COOM, $CH_2COOM$ oder einen Substituenten wie für $R^5$ definiert steht.

**9.** Verwendung gemäss Anspruch 8, **dadurch gekennzeichnet, dass** $R^1$, $R^2$, $R^3$ und $R^6$ für H und $R^4$ für COOM steht.

**10.** Verwendung gemäss einem der Ansprüche 8 oder 9, **dadurch gekennzeichnet dass**, x für 0 steht.

**11.** Verwendung gemäss einem der Ansprüche 8 bis 10, **dadurch gekennzeichnet, dass** das Polymer **Pa** 50 bis 99.5 Mol-%, vorzugsweise 70 bis 99 Mol-% der Säureeinheit **A** der Formel (I), 0.5 bis 50 Mol-%, vorzugsweise 1 bis 30 Mol-% der Struktureinheit **B** der Formel (II), und gegebenenfalls 0 bis 49 Mol-% der Struktureinheit **C** umfasst, jeweils bezogen auf die Gesamtmolmenge der Struktureinheiten von **A, B** und **C** im Polymer **Pa.**

**12.** Verwendung gemäss einem der Ansprüche 8 bis 11, **dadurch gekennzeichnet, dass** das Polymer **Pb** 40 bis 99.5 Mol-%, vorzugsweise 50 bis 75 Mol-% der Säureeinheit **A** der Formel (I), 0.5 bis 60 Mol-%, vorzugsweise 20 bis 50 Mol-% der Struktureinheit **B** der Formel (II), und gegebenenfalls 0 bis 49 Mol-% der Struktureinheit **C** umfasst, jeweils bezogen auf die Gesamtmolmenge der Struktureinheiten von **A, B** und **C** im Polymer **Pb.**

**13.** Verwendung einer Polymermischung umfassend mindestens ein Polymer **Pa** und mindestens ein Polymer **Pb,** wie sie als Polymermischung in einem der vorhergehenden Ansprüche beschrieben ist, zur Herstellung von Gips-Formkörpern.

**14.** Mineralisches Bindemittel enthaltendes Gemisch umfassend mindestens 30 Gew.-% Gips, bezogen auf das Gesamtgewicht des mineralischen Bindemittels und eine Polymermischung umfassend mindestens ein Polymer **Pa** und mindestens ein Polymer **Pb,** wie sie als Polymermischung in einem der Ansprüche 1 - 12 beschrieben ist.

**15.** Dispergiermittel für eine Gipszusammensetzung enthaltend:

(i) 1 bis 95 Gew.% einer Polymermischung umfassend mindestens ein Polymer **Pa** und mindestens ein Polymer **Pb,** wie sie als Polymermischung in einem der Ansprüche 1 - 12 beschrieben ist, und
(ii) 0 bis 95 Gew.% Wasser.

Europäisches Patentamt
European Patent Office
Office européen des brevets

# EUROPÄISCHER RECHERCHENBERICHT

Nummer der Anmeldung
EP 10 17 5221

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 006 258 A1 (SIKA TECHNOLOGY AG [CH]) 24. Dezember 2008 (2008-12-24)<br>* Ansprüche 1-23 *<br>----- | 1-15 | INV.<br>C04B24/00<br>C04B24/26<br>C04B28/14 |
| A | EP 2 154 118 A1 (SIKA TECHNOLOGY AG [CH]) 17. Februar 2010 (2010-02-17)<br>* Ansprüche 1-15; Beispiele 1-2 *<br>----- | 1-15 | |
| A | FR 2 827 593 A1 (CHRYSO SAS [FR]) 24. Januar 2003 (2003-01-24)<br>* Ansprüche 1-15; Beispiele 1-5 *<br>----- | 1-15 | |
| A | WO 2009/056553 A1 (SIKA TECHNOLOGY AG [CH]; HAMPEL CHRISTINA [CH]; AL SHEMARI JABBAR [CH]) 7. Mai 2009 (2009-05-07)<br>* Ansprüche 1-22; Beispiele 1-5 *<br>----- | 1-15 | |
| A | WO 2009/056552 A1 (SIKA TECHNOLOGY AG [CH]; HAMPEL CHRISTINA [CH]; VELTEN ULF [CH]; SULSE) 7. Mai 2009 (2009-05-07)<br>* Ansprüche 1-24; Beispiele 1-5 *<br>----- | 1-15 | |
| | | | RECHERCHIERTE SACHGEBIETE (IPC) |
| | | | C04B |

Der vorliegende Recherchenbericht wurde für alle Patentansprüche erstellt

1

| Recherchenort | Abschlußdatum der Recherche | Prüfer |
|---|---|---|
| Den Haag | 26. Januar 2011 | Burtan, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 10 17 5221

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2011

| Im Recherchenbericht angeführtes Patentdokument | Datum der Veröffentlichung | Mitglied(er) der Patentfamilie | Datum der Veröffentlichung |
|---|---|---|---|
| EP 2006258 A1 | 24-12-2008 | AU 2008263964 A1 | 18-12-2008 |
| | | CA 2688445 A1 | 18-12-2008 |
| | | WO 2008152046 A1 | 18-12-2008 |
| | | JP 2010528976 T | 26-08-2010 |
| | | US 2010137476 A1 | 03-06-2010 |
| EP 2154118 A1 | 17-02-2010 | WO 2010012804 A1 | 04-02-2010 |
| FR 2827593 A1 | 24-01-2003 | AT 330915 T | 15-07-2006 |
| | | DE 60212646 T2 | 14-06-2007 |
| | | EP 1419123 A1 | 19-05-2004 |
| | | ES 2266607 T3 | 01-03-2007 |
| | | WO 03010110 A1 | 06-02-2003 |
| | | US 2004266932 A1 | 30-12-2004 |
| WO 2009056553 A1 | 07-05-2009 | AU 2008320918 A1 | 07-05-2009 |
| | | CN 101842329 A | 22-09-2010 |
| | | EP 2065351 A1 | 03-06-2009 |
| | | US 2010305238 A1 | 02-12-2010 |
| WO 2009056552 A1 | 07-05-2009 | AU 2008320917 A1 | 07-05-2009 |
| | | CN 101842330 A | 22-09-2010 |
| | | EP 2065350 A1 | 03-06-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9735814 A1
- WO 9509821 A2
- DE 10015135 A1
- EP 1138697 A1
- EP 1348729 A1
- WO 2005090416 A1
- EP 1138697 B1
- EP 1061089 B1